# EUROPÄISCHE PATENTSCHRIFT

(11) **EP 0 786 398 B1**
(45) Veröffentlichungstag und Bekanntmachung des Hinweises auf die Patenterteilung: **06.05.1999**
(21) Anmeldenummer: 97100726.5
(22) Anmeldetag: 17.01.1997
(51) Int. Cl.: B62D 65/00

(54) **Kraftfahrzeug mit einer Karosserietragstruktur und Montagelehre**
Motor vehicle with body structure and assembling jig
Structure d'une carrosserie d'un véhicule à moteur et gabarit de montage

(30) Priorität: 29.01.1996 DE 19603102; 27.12.1996 DE 19654446
(43) Veröffentlichungstag der Anmeldung: 30.07.1997
(73) Patentinhaber: Micro Compact Car AG, 2500 Biel 4 (CH)
(72) Erfinder: Tomforde, Johann, 71069 Sindelfingen (DE); Pothoven, Alexander, 71207 Flacht/Weissach (DE); Freischläger, Ralf, 71229 Leonberg (DE)
(74) Vertreter: Weiss, Klaus

(56) Entgegenhaltungen:
- DE-A- 4 115 755
- DE-C- 4 321 752
- US-A- 4 589 199
- US-A- 5 203 073

## Beschreibung

Die Erfindung betrifft ein Kraftfahrzeug mit einer Karosserietragstruktur und mehreren, an der Karosserietragstruktur festlegbaren Karosserieteilen, sowie eine Montagelehre für das Kraftfahrzeug.

Aus der DE 43 21 752 C1 ist es bekannt, ein Karosserieteil in Form einer Fahrzeugtür mittels einer Scharnieranordnung an einer B-Säule einer Karosserietragstruktur eines Kraftfahrzeugs zu befestigen. An eine solche Fahrzeugtür anschließende Karosserieteile wie vordere oder hintere Kotflügel können unter Umständen an der Karosserietragstruktur so befestigt sein, daß die verschiedenen Karosserieteile nicht exakt zueinander ausgerichtet sind und aufgrund von unterschiedlichen Spalttoleranzen zwischen einander angrenzenden Karosserieteilen ein uneinheitliches Gesamtbild der Karosserieaußenhaut entsteht.

Die DE 41 15 755 A1 offenbart ein Kraftfahrzeug, dessen Stoßfänger mittels einer justierbaren Halterung an der Fahrzeugkarosserie festlegbar ist, um bei der Montage des Stoßfängers eine Beschädigung der Karosserie zu vermeiden. Dazu weist die Halterung ein in Fahrzeuglängsrichtung verschiebbares Führungsteil auf, das mit einem am Stoßfänger angeordneten Gleitteil zusammenwirkt. Nach der Montage des Stoßfängers kann das Führungsteil in der in Fahrzeuglängsrichtung verlaufenden Verschieberichtung bewegt werden, wodurch der Stoßfänger bis unmittelbar an die benachbarte Karosseriekante herangeschoben werden kann.

Aufgabe der Erfindung ist es, ein Kraftfahrzeug der eingangs genannten Art zu schaffen, das mit einer gleichmäßig und einheitlich angeordneten Karosseriebeplankung versehen ist.

Diese Aufgabe wird dadurch gelöst, daß in einem Bereich zwischen wenigstens zwei aneinander angrenzenden Karosserieteilen eine Montagelehre mit der Karosserietragstruktur verbunden ist, wobei die Montagelehre wenigstens eine Justierkante aufweist, an der wenigstens ein angrenzendes Karosserieteil ausrichtbar ist. Durch die erfindungsgemäße Lösung ist es möglich, aneinander angrenzende Karosserieteile einheitlich auszurichten und somit auch die Montagepositionen von Stoßfängern und Scheinwerfern entsprechend anzupassen. Zwischen den einzelnen aneinander angrenzenden Karosserieteilen ergibt sich daher immer ein gleichmäßiges Spaltmaß und somit auch ein gleichmäßiger Fugen- und Sickenverlauf. Außerdem ist es möglich, zwischen allen aneinander angrenzenden Karosserieteilen ein Spaltmaß mit gleichem Maß zu erzielen. Nachjustierungen von beweglichen Karosserieteilen wie Fahrzeugtüren, Heckdeckeln oder Heckklappen entfallen, da die beweglichen Karosserieteile bereits bei der Montage an der Karosserietragstuktur entsprechend justiert werden.

In Ausgestaltung der Erfindung weist die Montagelehre Positionieraufnahmen auf, mittels derer die Montagelehre auf korrespondierende Zentrierelementen an tragstrukturseitig festgelegten Scharnieren eines schwenkbeweglichen Karosserieteiles des Kraftfahrzeugs aufsteckbar und relativ zu den Scharnieren zentrierbar ist. Dadurch bilden die Scharniere eine Lehre für die Montagelehre, so daß eine exakte Ausrichtung der Montagelehre relativ zur Karosserietragstruktur ermöglicht wird. Als schwenkbewegliche Karosserieteile sind insbesondere Seitentüren vorgesehen. Als entsprechende Karosserieteile können jedoch auch Heckklappen, Motorhauben und andere Schwenkteile dienen.

In weiterer Ausgestaltung der Erfindung ist als Zentrierelement an jedem Scharnier wenigstens ein rechtwinklig nach außen abragender Zentrierstift vorgesehen, und in der Montagelehre sind korrespondierend offene Steckaufnahmen vorgesehen. Dadurch wird beim Aufstecken der Montagelehre bereits eine exakte Ausrichtung relativ zu den Scharnieren erzielt. Die Ausrichtung durch die Zentrierstifte und die Steckaufnahmen gewährleistet insbesondere eine genaue Positionierung in Fahrzeuglängsrichtung.

In weiterer Ausgestaltung der Erfindung ist an einem Scharnier eine Stützkante für eine Abstützung der Montagelehre in Fahrzeughochrichtung vorgesehen, an der sich ein Stützanschlag der Montagelehre abstützt. Die Stützkante und der Stützanschlag schaffen eine Ausrichtung und Stützung in Fahrzeughochrichtung relativ zur Karosserietragstruktur.

In weiterer Ausgestaltung der Erfindung ist die Montagelehre mittels mehrerer, über ihre Länge verteilter Befestigungspunkte an der Karosserietragstruktur festlegbar. Entsprechende Befestigungselemente schaffen somit die Fixierung der Montagelehre in der jeweils ausgerichteten Endposition, wobei die Fixierung gleichzeitig die Festlegung der Montagelehre relativ zur Karosserietragstruktur in Fahrzeugquerrichtung gewährleistet.

In weiterer Ausgestaltung der Erfindung weist die Montagelehre wenigstens eine Raststelle für die Anbindung eines angrenzenden Karosserieteils mittels einer Rastverbindung auf. Dadurch ist es möglich, ein angrenzendes Karosserieteil zumindest teilweise ohne zusätzliche Befestigungselemente zu fixieren.

In weiterer Ausgestaltung der Erfindung ist die Montagelehre an Befestigungspunkten von Türscharnieren einer Seitentür des Kraftfahrzeugs befestigbar. Dadurch werden zur Befestigung der Montagelehre in einfacher Weise bereits vorhandene Befestigungspunkte vorgesehen.

In weiterer Ausgestaltung der Erfindung ist die Montagelehre an den Befestigungspunkten mit Hilfe der Befestigungselemente für die Türscharniere an der Karosserietragstruktur befestigbar. Dadurch sind zur Befestigung der Montagelehre keine zusätzlichen Befestigungselemente notwendig, da die Montagelehre in einfacher Weise zusammen mit den Türscharnieren an der Karosserietragstruktur befestigt wird.

In weiterer Ausgestaltung der Erfindung ist die Montagelehre mit Fixierelementen zur Befestigung wenigstens eines angrenzenden Karosserieteiles versehen. Dadurch weist die Montagelehre eine Doppelfunktion auf, indem sie zum einen zur Ausrichtung und zum anderen zur Befestigung angrenzender Karosserieteile oder Bauteile dient.

In weiterer Ausgestaltung der Erfindung weisen die Fixierelemente Führungen zum Aufschieben des wenigstens einen angrenzenden Karosserieteiles auf. Durch diese Führungen wird für das angrenzende Karosserieteil bereits eine definierte Montagerichtung vorgegeben, die eine exakte Montage relativ zu der Montagelehre ermöglicht.

In weiterer Ausgestaltung der Erfindung sind den Fixierelementen Raststellen zum formschlüssigen Sichern des wenigstens einen Karosserieteiles in der aufgeschobenen Endposition zugeordnet. Dadurch wird für das wenigstens eine aufzuschiebende Karosserieteil bereits ohne den Einsatz zusätzlicher Befestigungsmittel eine ausreichende Fixierung an der Karosserietragstruktur erzielt. Vorzugsweise stützt sich das Karosserieteil in seiner aufgeschobenen Endposition an der Justierkante der Montagelehre ab.

In weiterer Ausgestaltung der Erfindung ist die Montagelehre als einstückiges Bauteil aus Kunststoff hergestellt. Dadurch ist die Montagelehre einfach, kostengünstig und in großen Stückzahlen herstellbar.

Weitere Vorteile und Merkmale der Erfindung ergeben sich aus den Unteransprüchen sowie aus der nachfolgenden Beschreibung von bevorzugten Ausführungsbeispielen der Erfindung, die anhand der Zeichnungen dargestellt sind.
- Fig. 1: zeigt in perspektivischer Darstellung einen Frontbereich einer Ausführungsform eines erfindungsgemäßen Kraftfahrzeugs, das im Bereich einer A-Säule mit einer auf Türscharniere einer Seitentür aufgesetzten Montagelehre versehen ist, an der vordere Kotflügel ausrichtbar und befestigbar sind,
- Fig. 2: in gegenüber der Fig. 1 vergrößerter Darstellung einen perspektivischen Ausschnitt eines weiteren Frontbereichs einer Ausführungsform eines erfindungsgemäßen Kraftfahrzeugs, das mit einer Montagelehre ähnlich Fig. 1 versehen ist,
- Fig. 3: eine gegenüber der Fig. 2 vergrößerte perspektivische Darstellung der Montagelehre nach Fig. 2,
- Fig. 4: in perspektivischer Darstellung eine weitere Ausführungsform einer Montagelehre ähnlich den Fig. 1 bis 3, die ebenfalls im Bereich einer A-Säule eines Kraftfahrzeugs auf Türscharniere einer Seitentür aufsetzbar ist,
- Fig. 5: in perspektivischer Darstellung eine weitere Ausführungsform einer Montagelehre, die an ein erfindungsgemäßes Kraftfahrzeug angesetzt ist,
- Fig. 6: in perspektivischer Darstellung eine weitere Ausführungsform eines erfindungsgemäßen Kraftfahrzeugs auf Höhe von Türscharnieren einer Seitentür, wobei die Türscharniere mit Zentrierstiften zum Aufstecken einer erfindungsgemäßen Montagelehre versehen sind,
- Fig. 7: in vergrößerter Darstellung eine weitere Ausführungsform einer erfindungsgemäßen Montagelehre,
- Fig. 8: eine rückseitige Ansicht einer letzten Ausführungsform einer erfindungsgemäßen Montagelehre,
- Fig. 9: eine Seitenansicht der Montagelehre nach Fig. 8, und
- Fig. 10: eine Frontansicht der Montagelehre nach Fig. 8 und 9.

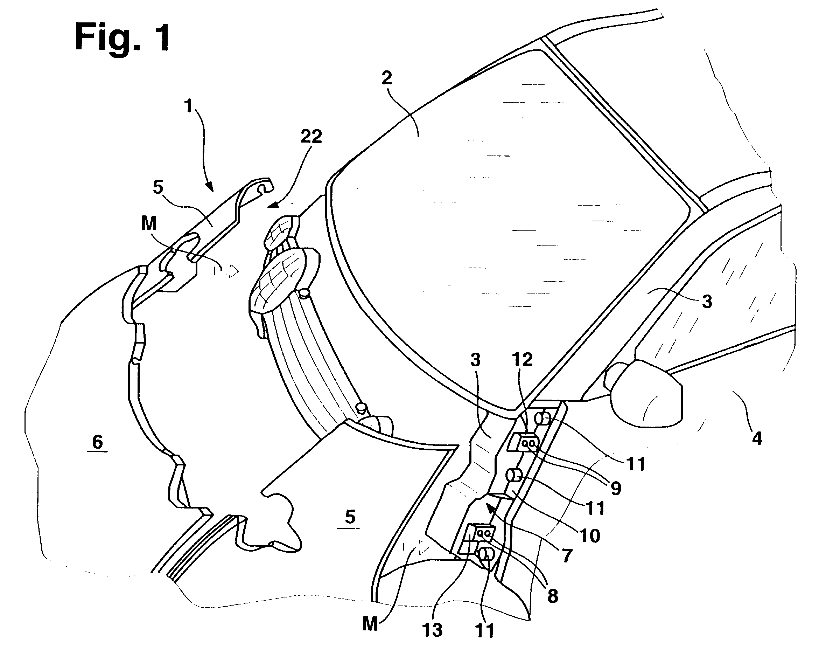

Ein Kraftfahrzeug 1 nach Fig. 1 stellt einen kompakten Personenkraftwagen dar, der eine Windschutzscheibe 2 aufweist, die von zwei A-Säulen 3 einer Karosserietragstruktur flankiert ist. An beiden A-Säulen 3 ist jeweils eine Seitentür 4 mit Hilfe von zwei Türscharnieren angeschlagen, wobei die tragstrukturseitigen Scharnierteile der Türscharniere mit Hilfe von Befestigungsschrauben 9, 11 an der A-Säule 3 befestigt sind. Die Türscharniere selbst sind nicht sichtbar, da auf die A-Säule 3 im Bereich der Türscharniere eine nachfolgend näher beschriebene Montagelehre 7 aufgesetzt ist. Die Montagelehre 7 stellt ein einstückiges Kunststoffbauteil dar und ist in Form eines Winkelprofils ausgebildet. Die Montagelehre 7 ist vertikal entlang der A-Säule 3 ausgerichtet und erstreckt sich von einem unteren Ende der A-Säule 3 bis etwa auf Höhe der Windschutzscheibe 2. Ein in Fahrtrichtung gesehenes hinteres Ende des Winkelprofils der Montagelehre 7 ist in Form einer Justierkante 10 ausgebildet, die über die gesamte Lange der Montagelehre 7 lotrecht nach außen abragt. Diese Justierkante 10 ist durch nicht näher bezeichnete Stützrippen der Montagelehre 7 stabilisiert. Auf Höhe der beiden Türscharniere ist die Montagelehre 7 mit kastenartigen Ausformungen 12 und 13 versehen, durch die die Montagelehre 7 an die von der Außenfläche der A-Säule 3 abragende Außenkontur der Türscharniere angepaßt ist. Die Ausbuchtungen 12 und 13 stellen zusätzlich für an die Montagelehre 7 anzusetzende Karosserieteile in Form der vorderen Kotflügel 5 Führungsblöcke dar, die eine exakte Ausrichtung der Kotflügel 5 an der Montagelehre 7 gewährleisten. An der Justierkante 10 sind drei in Abstand über ihre Länge verteilt angeordnete Fixierzapfen 11 vorgesehen, auf die korrespondierende Fixierelemente an den vorderen Kotflügeln 5 aufrastbar sind. Diese Fixierstellen 22 sind an den hinteren Stirnkanten der vorderen Kotflügel 5 vorgesehen und derart korrespondierend zu den Fixierzapfen 11 ausgebildet, daß die Kotflügel 5 durch Aufdrücken von außen auf den Fixierzapfen 11 aufrasten.

Zur Montage der Seitentüren 4 und der angrenzenden Kotflügel 5 an der Karosserietragstruktur werden zunächst die tragstrukturseitigen Scharnierteile der Türscharniere der Seitentür 4 mit Hilfe der Befestigungsschrauben 8 und 9 unter gleichzeitigem Aufsetzen der Montagelehre 7 mit der A-Säule 3 verschraubt. Anschließend wird jede Seitentür durch eine Justierung der türseitigen Scharnierteile der Türscharniere derart zu der Justierkante 10 der Montagelehre 7 ausgerichtet, daß die nicht näher bezeichnete vordere Stirnkante der Seitentür 4 exakt parallel zu der Justierkante 10 ausgerichtet ist. Anschließend werden die vorderen Kotflügel 5 auf die Fixierzapfen 11 der Montagelehre 7 aufgesetzt, wobei durch die Lage der Fixierzapfen 11 sowie die Anordnung der zugehörigen Fixierstellen 22 an den vorderen Kotflügeln 5 bereits eine exakte Ausrichtung der vorderen Kotflügel 5 gewährleistet ist. Dabei liegen die hinteren Stirnkanten der vorderen Kotflügel 5 exakt bündig an der Justierkante 10 der Montagelehre 7 an. Dadurch, daß sowohl die Seitentüren 4 als auch die vorderen Kotflügel 5 mit gleichmäßigem Fugenabstand exakt zueinander ausgerichtet sind, ist es möglich, die zusätzlichen Karosserieteile wie eine in Fig. 1 dargestellte Stoßfängerabdechung 6 exakt zwischen die Kotflügel 5 einzupassen.

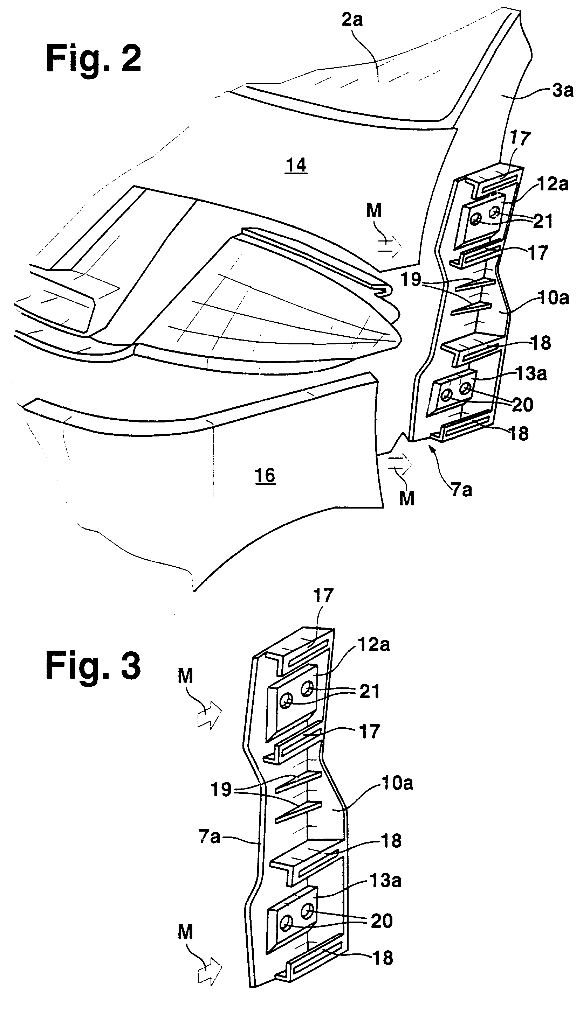

Ein Kraftfahrzeug nach Fig. 2 entspricht im wesentichen dem Kraftfahrzeug nach Fig. 1. Auch bei diesem Kraftfahrzeug ist eine Windschutzscheibe 2a zu beiden Seiten von jeweils einer A-Säule 3a der Karossietragstruktur flankiert. Auch bei diesem Kraftfahrzeug ist vor einer Seitentür 4a an der A-Säule 3a eine Montagelehre 7a in Form eines einstückigen Kunststoffbauteils montiert. Auch die Montagelehre 7a ist im Bereich der Befestigungspunkte der Türscharniere der Seitentür 4a mit Hilfe der zu den Türscharnieren gehörigen Befestigungsschrauben 8a und 9a befestigt, wozu die Montagelehre mit korrespondierenden Bohrungen 20, 21 versehen ist. Die Montagelehre 7a weist wie die Montagelehre 7 nach Fig. 1 ein Winkelprofil auf, das mit einer durch Stützrippen 19 verstärkten Justierkante 10a versehen ist. An der Montagelehre 7a sind im Gegensatz zu dem Kraftfahrzeug nach Fig. 1 jedoch zwei karosserieteile 14 und 16 montierbar, wobei ein unteres Karosserieteil 16 einen vorderen Kotflügel und ein oberes Karosserieteil 14 eine Serviceklappe darstellt. Wie auch aus Fig. 3 erkennbar ist, weist die Montagelehre 7a eine obere Gleitschiene 17 und eine untere Gleitschiene 18 auf, wobei beide Gleitschienen 17 und 18 einstückig an dem Kunststoffbauteil der Montagelehre 7a angeformt sind. Beide Gleitschienen 17, 18 weisen jeweils zwei zueiander korrespondierende Führungsprofile auf, die jeweils einander gegenüberliegend ausgerichtet sind. Die Gleitschienen 17 und 18 sind in Fahrzeuglängsrichtung ausgerichtet und in Fahrtrichtung nach vorne offen. Nach hinten werden die Gleitschienen 17 und 18 durch die Justierkante 10a begrenzt. Die obere Gleitschiene 17 dient zur Aufnahme eines korrespondierenden, im Bereich der hinteren Stirnkante der Serviceklappe 14 vorgesehenen Gleitstückes. Die untere Gleitschiene 18 dient zur Aufnahme eines weiteren, im Bereich der hinteren Stirnkante des Kotflügels 16 angeordneten Gleitstückes. Sowohl die Serviceklappe 14 als auch der Kotflügel 16 sind in Richtung der Pfeile der Montagerichtung M auf die entsprechenden Gleitschienen 17, 18 der Montagelehre 7a aufschiebbar. An den Außenseiten der Gleitprofile 17, 18 der beiden Gleitschienen 17 und 18 sind zusätzlich nicht näher bezeichnete, höckerartig nach außen abragende Längsstege angeformt, denen an der Serviceklappe 14 bzw. an dem Kotflügel 16 im Bereich des jeweiligen Gleitstückes korrespondierende Raststellen zugeordnet sind. Dadurch rasten die beiden Karosserieteile 14, 16 beim Aufschieben auf die Gleitschienen 17 und 18 in ihre aufgeschobene Endposition, in der ihre hinteren Stirnkanten an der Justierkante 10a anliegen, jeweils auf den angeformten Stegen auf und sind in dieser aufgeschobenen Endposition fixiert. Auch bei dieser Ausführungsform werden die an die Seitentür 4a angrenzenden Karosserieteile in Form der Serviceklappe 14 und des vorderen Kotflügels 16 exakt zu der Seitentüre 4a ausgerichtet, so daß sich ein gleichmäßiger Fugenverlauf zwischen den aneinander angrenzenden Karosserieteilen ergibt.

Bei anderen erfindungsgemäßen Ausführungsbeispielen ist die Montagelehre an anderen Teilen der Karosseriestruktur montiert. Dabei sind der Montagelehre andere Karosserieteile wie hintere Seitentüren und hintere Kotflügel oder Heckklappen zugeordnet. Bei dem beschriebenen Ausführungsbeispiel war die Montagelehre für etwa vertikal ansetzbare Karosserieteile vorgesehen. In gleicher Weise ist die Montagelehre aber auch für etwa horizontal oder schräg anzubringende Karosserieteile wie Motorhauben und Heckdeckel geeignet, indem sie entsprechend an geeigneten Teilen der Karosserietragstruktur montiert wird.

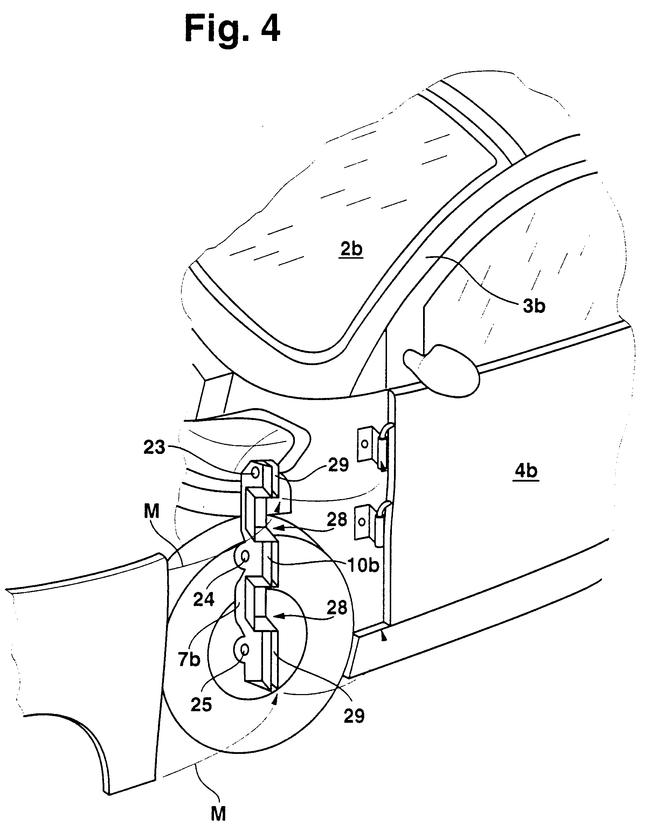

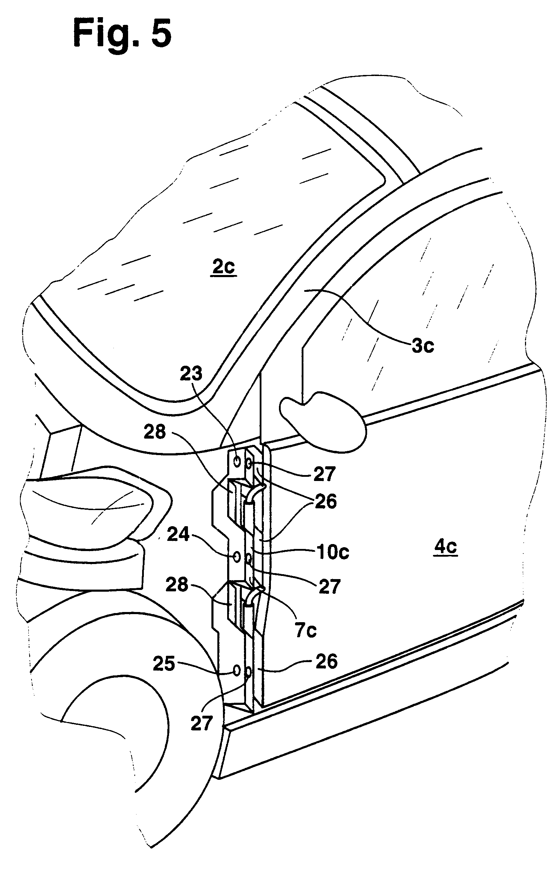

Bei einem Kraftfahrzeug gemäß Fig. 4, dessen Aufbau im wesentlichen dem Kraftfahrzeug nach den Fig. 1 und 2 entspricht, ist eine Montagelehre 7b vorgesehen, die wie auch die Montagelehren gemäß den Fig. 1 bis 3 eine Justierkante 10b aufweist. Diese Justierkante 10b erstreckt sich über die gesamte Länge der Montagelehre 7b, ist jedoch durch zwei winkelförmige Aufnahmen 28 und 29 für die Türscharniere der Seitentür 4b unterbrochen. Die Ausbildung des Kraftfahrzeugs nach den Fig. 4 und 5 sowie die Anordnung der Montagelehre im Bereich der A-Säule 3b bzw. 3c entspricht der bereits ausführlich beschriebenen Darstellung der beiden Ausführungsformen gemäß den Fig. 1 bis 3, so daß auf detaillierte Ausführungen hierzu verzichtet wird. Auch die Montagelehre 7b wird mit Hilfe von drei Montagepunkten 23, 24, 25 im Bereich der Türscharniere auf der Karosserietragstruktur befestigt. Die Montagelehre 7b wird dabei im Bereich der A-Säule 3b seitlich der Windschutzscheibe 2b und - auf die Fahrtrichtung bezogen - vor der Seitentür 4b angeordnet. Wesentlicher Unterschied der Ausgestaltung nach Fig. 4 ist es, daß bei der Montagelehre 7b ein sich über die Länge der Montagelehre 7b parallel zu der Justierkante 10b erstreckende Rastschlitz 29 vorgesehen ist, der ebenfalls durch die beiden Aufnahmen 28 unterbrochen ist. In diesen Rastschlitz 29 wird eine hintere Stirnkante des nach vorne anschließenden Kotflügels eingerastet, die dazu mit korrespondierenden, nach innen rechtwinklig abgewinkelten Rastkanten (nicht dargestellt) versehen ist. Für eine einfache Montage werden die beiden vorderen Kotflügel zusammen mit dem übrigen Frontbereich der Karosserie zunächst zu einer vormontierten Frontbaueinheit zusammengefügt, die eine schalenartige Form aufweist. Diese Frontbaueinheit wird nun von vorne an das Kraftfahrzeug angesetzt, wobei die Kotflügel im Bereich ihrer Rastkanten zusätzlich um einen gewissen Betrag nach außen gespreizt werden. Die Montagerichtung ist durch die Pfeile M verdeutlicht. Durch das Auseinanderspreizen der Frontbaueinheit ist es möglich, diese bis auf Höhe der Rastschlitze 29 der Montagelehren 7b auf beiden Seiten des Kraftfahrzeugs heranzuführen und anschließend die Kotflügelenden in einfacher Weise in die jeweiligen Rastschlitze 29 einzurasten. Dadurch wird eine einfache und sichere Montage der Frontbaueinheit erzielt.

Die Montagelehre 7c nach Fig. 5, die im wesentlichen der Ausführung gemäß Fig. 4 entspricht, ist mit Hilfe der Montagepunkte 23, 24 und 25 bereits an der Karosserietragstruktur des Kraftfahrzeugs 2c, 3c, 4c befestigt, wobei auch diese Montagelehre 7c einen zu der Justierkante 10c parallelen Rastschlitz 26 aufweist, der seitlich nach außen offen ist. Auch dieser Rastschlitz 26 ist durch die Türscharnieraufnahmen 28 in seiner Länge unterbrochen. Aus der Darstellung nach Fig. 5 ist erkennbar, daß die Montagelehre im Bereich des Rastschlitzes 26 über ihre Länge verteilt drei Fixierpunkte 27 aufweist, die zur Fixierung der korrespondierenden Rastkanten des Kotflügels der Frontbaueinheit dienen. Die Rastkante jedes Kotflügels der Frontbaueinheit weist auf Höhe dieser drei Fixierpunkte drei Bohrungen auf, die in der in den Rastschlitz 26 eingesetzten Rastposition des Kotflügels und damit der Frontbaueinheit mit den Fixierpunkten 27 fluchten. Durch diese Fixierpunkte 27 und durch die korrespondierenden Bohrungen der Frontbaueinheit hindurch werden nun Fixierelemente von der Türseite aus angesetzt, wobei als Fixierelemente vorzugsweise Schrauben-/Mutterverbindungen dienen. Diese Fixierpunkte 27 sind insbesondere für Ausführungen von Vorteil, bei denen der Rastschlitz 26 keine Raststellen aufweist, sondern lediglich als geradliniger Einführschlitz ausgebildet ist, der keine formschlüssige Sicherung der Kotflügel und damit der Frontbaueinheit gewährleistet. Selbstverständlich sind auch andere Fixierelemente in Form von Rastzapfen, Nietverbindungen oder ähnlichem einsetzbar.

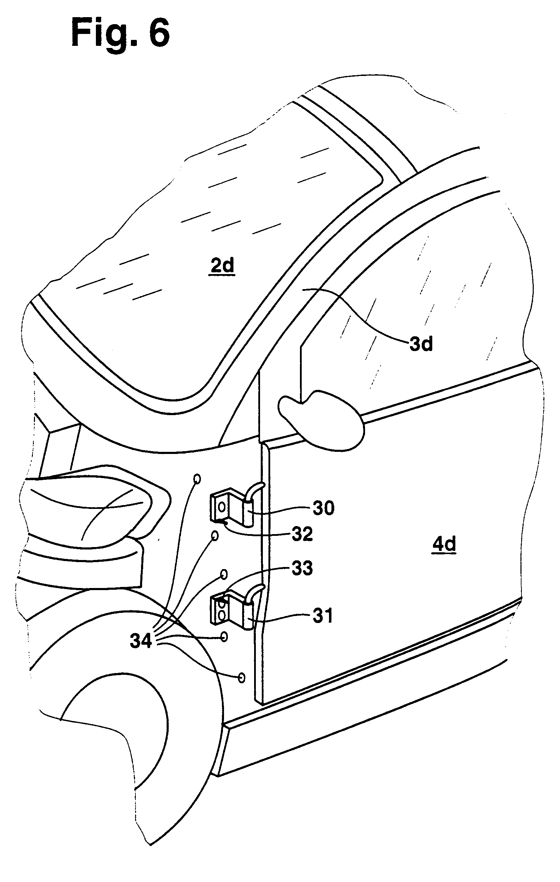

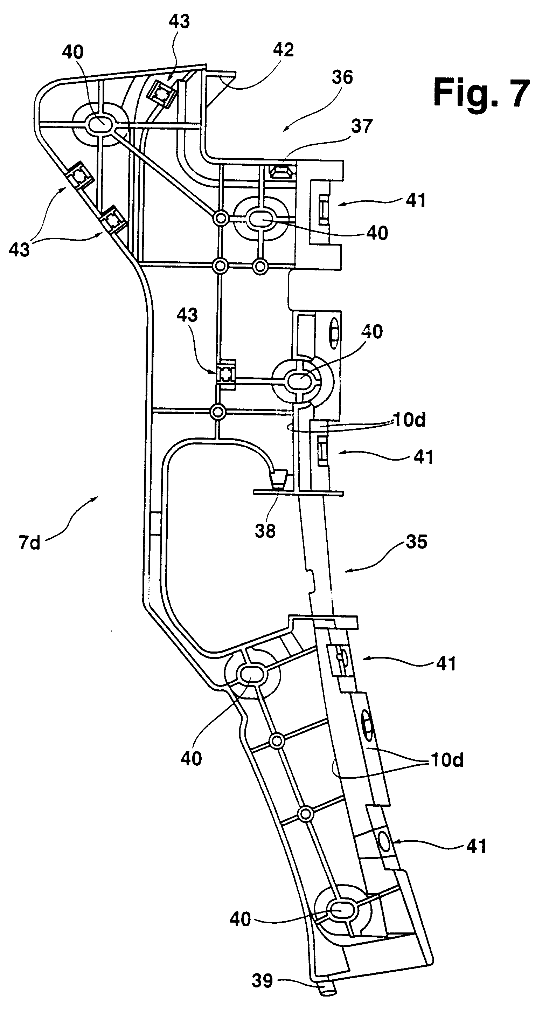

Ein Kraftfahrzeug in Form eines als Kleinwagen gestalteten Personenkraftwagens weist gemäß Fig. 6 eine Seitentür 4d auf, die etwa auf Höhe einer eine Windschutzscheibe 2d flankierenden A-Säule 3d mit Hilfe von zwei Türscharnieren 30 und 31 an die selbsttragende Karosserietragstruktur des Personenkraftwagens angeschlagen ist. Die beiden Türscharniere 30, 31 sind in Abstand übereinander und unterhalb einer Fahrzeugbordkante auf der Karosserietragstruktur befestigt. Zu diesen Türscharnieren 30, 31 wird eine Montagelehre 7d (Fig. 7) ausgerichtet und über Befestigungspunkte 34 an der Karosserietragstruktur festgelegt. Die Festlegung der Montagelehre 7d an den fünf Befestigungspunkten 34 erfolgt mittels Schraubverbindungen. Für die Ausrichtung der Montagelehre 7d dienen die beiden Türscharniere 30, 31 als Lehre. Zur Zentrierung der Montagelehre 7d relativ zu den Türscharnieren 30 und 31 weist das obere Türscharnier 30 einen horizontal nach außen abragenden Positionierbolzen 32 und das untere Türscharnier 31 einen ebenfalls horizontal nach außen abragenden Positionierbolzen 33 auf. Die Positionierbolzen 32, 33 sind entweder starr auf den zugehörigen Türscharnieren 30, 31 festgelegt, oder aber einstückig an diesen angeformt. Durch die Positionierbolzen 32, 33 wird eine Ausrichtung der Montagelehre 7d in Fahrzeuglängsrichtung geschaffen. Dazu sind in der Montagelehre 7d sowohl im Bereich eines Ausschnittes 36 für das obere Türscharnier 30 als auch im Bereich eines Ausschnittes 35 für das untere Türscharnier 31 als Steckaufnahmen dienende Positionieraufnahmen 37, 38 vorgesehen, die entsprechend den Abmessungen der Positionierbolzen 32, 33 dimensioniert sind. In den Positionieraufnahmen 37 und 38 sind außerdem elastisch nachgiebige Klemmlaschen vorgesehen, die eine gewisse Sicherung und Klemmung der Montagelehre 7d nach dem Aufschieben auf die Positionierbolzen 32 und 33 bilden. Die Montagelehre 7d entspricht bis auf die beschriebenen Unterschiede in ihrem grundsätzlichen Aufbau den zuvor anhand der Fig. 1 bis 5 beschriebenen Montagelehren. Insbesondere weist die Montagelehre eine Justierkante 10d auf.

Um auch in Fahrzeughochrichtung eine exakte Ausrichtung der Montagelehre 7d zu erreichen, ist im Bereich des oberen Ausschnittes 36 an der Montagelehre 7d ein Stützanschlag 42 angeformt, der horizontal in Fahrzeuglängsrichtung nach hinten abragt und sich auf einer Oberkante des Türscharnieres 30 abstützt. Anstelle einer Oberkante kann das obere Türscharnier auch eine andere Form einer Positionierstütze aufweisen, die zur Stützung des Stützanschlages 42 dient und in seinen Abmessungen und seiner Position an den Stützanschlag 42 angepaßt ist.

Um die Montagelehre 7d tragstrukturseitig festlegen zu können, weist die Montagelehre 7d auf Höhe der Befestigungspunkte 34 an der Karosserietragstruktur eine entsprechende Anzahl von Befestigungsöffnungen 40 auf, die über die Fläche der Montagelehre 7d verteilt angeordnet sind.

An der Montagelehre 7d sind außerdem mehrere Kabelführungsklammern 43 angeformt, die die Führung und Fixierung entsprechender elektrischer Kabelsätze ermöglichen. An einer Rückseite der Montagelehre 7d sind mehrere Befestigungsaugen 41 vorgesehen, auf die Befestigungsklammern aufschiebbar sind. Mit diesen Befestigungsaugen 41 verschraubt wird eine rückseitige Kante eines anschließenden Karosserieteiles, das ähnlich dem Karosserieteil 5 gemäß Fig. 1 gestaltet ist. Die Montagelehre 7d weist im übrigen an ihrer Unterseite einen Fortsatz 39 auf, mit dem eine Kotflügelkante durch eine entsprechende Rastverbindung verrastbar ist.

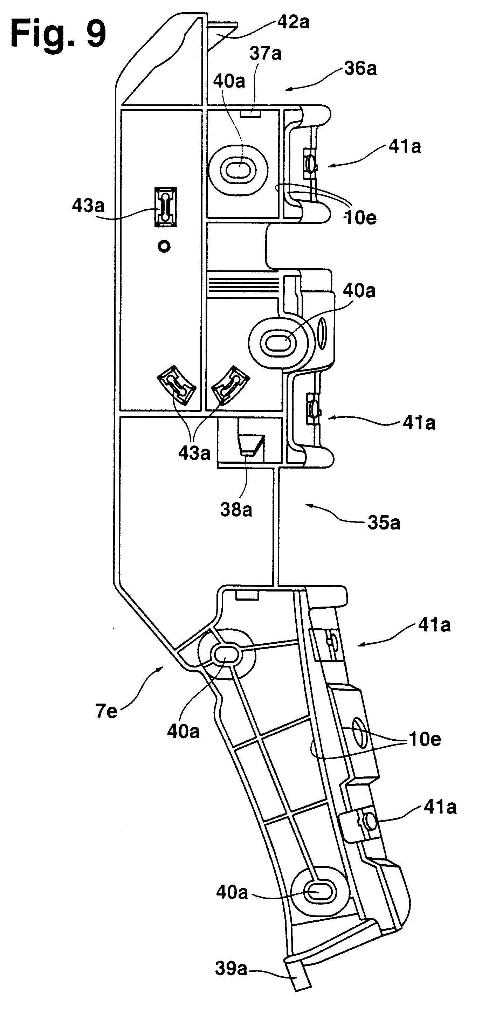

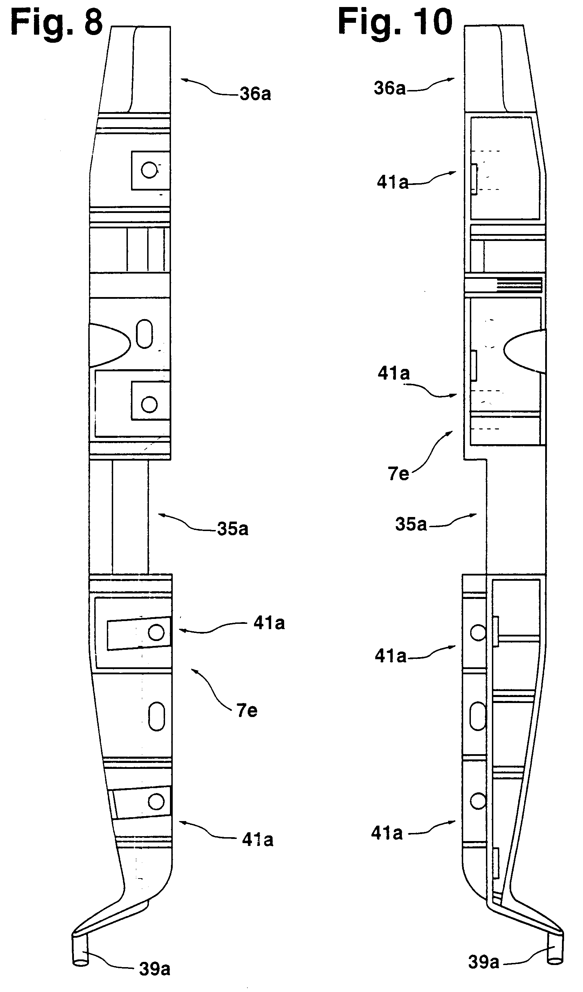

Die Montagelehre 7e nach den Fig. 8 bis 10 entspricht im wesentlichen der zuvor beschriebenen Montagelehre 7d. Diese Montagelehre 7e ist für einen anderen Kleinwagen vorgesehen und weist eine geringfügig anders gestaltete Form auf. An der grundlegenden Funktion der Montagelehre 7e und an der Ausrichtung relativ zu den Türscharnieren 30, 31 ändert sich bei dieser Ausführungsform gegenüber dem Ausführungsbeispiel nach Fig. 7 jedoch nichts. Auch die Montagelehre 7e weist eine Justierkante 10e auf, deren Funktion den zuvor beschriebenen Justierkanten entspricht. Die funktionsgleichen Elemente und Abschnitte der Montagelehre 7e sind daher mit den gleichen Bezugszeichen wie die der Montagelehre 7d - lediglich unter Hinzufügung des Buchstaben 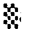 a 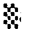 - versehen worden. Für die nähere Erläuterung der Montagelehre 7e nach den Fig. 8 bis 10 wird daher auf die Beschreibung zur Fig. 7 verwiesen.

## Patentansprüche

1. Kraftfahrzeug mit einer Karosserietragstruktur und mehreren, an der Karosserietragstruktur festlegbaren Karosserieteilen,
**dadurch gekennzeichnet,**
daß in einem Bereich zwischen wenigstens zwei aneinander angrenzenden Karosserieteilen (4, 5; 4a, 14, 16; 4b, 4c) eine Montagelehre (7, 7a, 7b, 7c, 7d, 7e) mit der Karosserietragstruktur (3, 3a, 3b, 3c, 3d) verbunden ist, wobei die Montagelehre (7, 7a, 7b, 7c, 7d, 7e) wenigstens eine Justierkante (10, 10a, 10b, 10c, 10d, 10e) aufweist, an der wenigstens ein angrenzendes Karosserieteil (4, 5; 4a, 14, 16; 4b, 4c) ausrichtbar ist.

2. Kraftfahrzeug nach Anspruch 1,
**dadurch gekennzeichnet,**
daß die Montagelehre (7d, 7e) Positionieraufnahmen (37, 38; 37a, 38a) aufweist, mittels derer die Montagelehre (7d, 7e) auf korrespondierende Zentrierelemente (32, 33) an tragstrukturseitig festgelegten Scharnieren (30, 31) eines schwenkbeweglichen Karosserieteiles (4d) des Kraftfahrzeugs aufsteckbar und relativ zu den Scharnieren (30 31) zentrierbar ist.

3. Kraftfahrzeug nach Anspruch 2,
**dadurch gekennzeichnet,**
daß als Zentrierelement (32, 33) an jedem Scharnier (30, 31) wenigstens ein rechtwinklig nach außen abragender Zentrierstift (32, 33) vorgesehen ist, und daß in der Montagelehre (7d, 7e) korrespondierend offene Steckaufnahmen (37, 38; 37a, 38a) vorgesehen sind.

4. Kraftfahrzeug nach einem der Ansprüche 1 bis 3,
**dadurch gekennzeichnet,**
daß an einem Scharnier (30) eine Stützkante für eine Abstützung der Montagelehre (7d, 7e) in Fahrzeughochrichtung vorgesehen ist, an der sich ein Stützanschlag (42, 42a) der Montagelehre (7d, 7e) abstützt.

5. Kraftfahrzeug nach wenigstens einem der vorhergehenden Ansprüche,
**dadurch gekennzeichnet,**
daß die Montagelehre (7d, 7e) mittels mehrerer, über ihre Länge verteilter Befestigungspunkte (40; 34; 40a) an der Karosserietragstruktur festlegbar ist.

6. Kraftfahrzeug nach wenigstens einem der vorhergehenden Ansprüche,
**dadurch gekennzeichnet,**
daß die Montagelehre (7d, 7e) wenigstens eine Raststelle (39, 39a) für die Anbindung eines angrenzenden Karosserieteils mittels einer Rastverbindung aufweist.

7. Kraftfahrzeug nach wenigstens einem der vorhergehenden Ansprüche,
**dadurch gekennzeichnet,**
daß die Montagelehre (7d, 7e) mit integrierten Kabelführungen (43, 43a) versehen ist.

8. Kraftfahrzeug nach Anspruch 1,
**dadurch gekennzeichnet,**
daß die Montagelehre (7, 7a, 7b, 7c) an Befestigungspunkten von Türscharnieren einer Seitentür (4, 4a, 4b, 4c) des Kraftfahrzeugs befestigbar ist.

9. Kraftfahrzeug nach Anspruch 2,
**dadurch gekennzeichnet,**
daß die Montagelehre (7, 7a) an den Befestigungspunkten mit Hilfe der Befestigungselemente (8, 9; 8a, 9a) für die Türscharniere an der Karosserietragstruktur (3, 3a) befestigbar ist.

10. Kraftfahrzeug nach einem der vorhergehenden Ansprüche, **dadurch gekennzeichnet,** daß die Montagelehre (7, 7a, 7b, 7c) mit Fixierelementen (11; 17, 18; 26, 27; 29) zur Befestigung wenigstens eines angrenzenden Karosserieteiles (5; 14, 16) versehen ist.

11. Kraftfahrzeug nach Anspruch 10,
**dadurch gekennzeichnet,**
daß die Fixierelemente (11; 17, 18) Führungen zum Aufschieben des wenigstens einen angrenzenden Karosserieteiles (5; 14, 16) aufweisen.

12. Kraftfahrzeug nach Anspruch 11,
**dadurch gekennzeichnet,**
daß den Fixierelementen (11; 17, 18) Raststellen zum formschlüssigen Sichern des wenigstens einen Karosserieteiles (5; 14, 16) in der aufgeschobenen Endposition zugeordnet sind.

13. Kraftfahrzeug nach einem der vorhergehenden Ansprüche, **dadurch gekennzeichnet,**
daß die Montagelehre (7, 7a, 7b, 7c) als einstückiges Bauteil aus Kunststoff hergestellt ist.

14. Montagelehre,
**dadurch gekennzeichnet,**
daß sie die Ausgestaltung der Montagelehre (7, 7a) für das Kraftfahrzeug nach einem der vorhergehenden Ansprüche aufweist.

15. Montagelehre nach Anspruch 14,
**dadurch gekennzeichnet,**
daß der Justierkante (10b, 10c, 10d, 10e) ein parallel verlaufender Aufnahmebereich zugeordnet ist, an den das korrespondierende Karosserieteil seitlich von außen her ansetzbar ist.

## Claims

1. Motor vehicle having a body support structure and a plurality of body parts which can be fixed to the body support structure, characterized in that, in a region between at least two mutually adjacent body parts (4, 5; 4a, 14, 16; 4b, 4c), an assembly template (7, 7a, 7b, 7c, 7d, 7e) is connected to the body support structure (3, 3a, 3b, 3c, 3d), the assembly template (7, 7a, 7b, 7c, 7d, 7e) having at least one adjustment edge (10, 10a, 10b, 10c, 10d, 10e), against which at least one adjacent body part (4, 5; 4a, 14, 16; 4b, 4c) can be aligned.

2. Motor vehicle according to Claim 1, characterized in that the assembly template (7d, 7e) has positioning receptacles (37, 38; 37a, 38a), by means of which the assembly template (7d, 7e) can be placed on corresponding centring elements (32, 33) on hinges (30, 31), fixed on the support-structure side, of a pivotably movable body part (4d) of the motor vehicle and can be centred relative to the hinges (30, 31).

3. Motor vehicle according to Claim 2, characterized in that at least one centring pin (32, 33) protruding outwards at right angles is provided on each hinge (30, 31) as the centring element (32, 33), and in that correspondingly open sockets (37, 38; 37a, 38a) are provided in the assembly template (7d, 7e).

4. Motor vehicle according to one of Claims 1 to 3, characterized in that a support edge for a support of the assembly template (7d, 7e) is provided on a hinge (30) in the vertical direction of the vehicle, against which support edge a support stop (42, 42a) of the assembly template (7d, 7e) is supported.

5. Motor vehicle according to at least one of the preceding claims, characterized in that the assembly template (7d, 7e) can be fixed on the body support structure by means of a plurality of fastening points (40; 34; 40a) distributed over the length of the said template.

6. Motor vehicle according to at least one of the preceding claims, characterized in that the assembly template (7d, 7e) has at least one latching location (39, 39a) for joining an adjacent body part by means of a latching connection.

7. Motor vehicle according to at least one of the preceding claims, characterized in that the assembly template (7d, 7e) is provided with integrated cable guides (43, 43a).

8. Motor vehicle according to Claim 1, characterized in that the assembly template (7, 7a, 7b, 7c) can be fastened at fastening points of door hinges of a side door (4, 4a, 4b, 4c) of the motor vehicle.

9. Motor vehicle according to Claim 2, characterized in that the assembly template (7, 7a) can be fastened at the fastening points with the aid of the fastening elements (8, 9; 8a, 9a) for the door hinges on the body support structure (3, 3a).

10. Motor vehicle according to one of the preceding claims, characterized in that the assembly template (7, 7a, 7b, 7c) is provided with fixing elements (11; 17, 18; 26, 27; 29) for fastening at least one adjacent body part (5; 14, 16).

11. Motor vehicle according to Claim 10, characterized in that the fixing elements (11; 17, 18) have guides for sliding on the at least one adjacent body part (5; 14, 16).

12. Motor vehicle according to Claim 11, characterized in that latching locations for securing the at least one body part (5; 14, 16) in a positively-locking manner in the slid-on end position are assigned to the fixing elements (11; 17, 18).

13. Motor vehicle according to one of the preceding claims, characterized in that the assembly template (7, 7a, 7b, 7c) is produced as a single component made of plastic.

14. Assembly template, characterized in that it has the configuration of the assembly template (7, 7a) for the motor vehicle according to one of the preceding claims.

15. Assembly template according to Claim 14, characterized in that the adjustment edge (10b, 10c, 10d, 10e) is assigned a receiving region which runs parallel and against which the corresponding body part can be positioned laterally from the outside.

## Revendications

1. Véhicule automobile comprenant une structure porteuse de carrosserie et plusieurs éléments de carrosserie pouvant être fixés à la structure porteuse de carrosserie,
caractérisé
en ce qu'un gabarit de montage (7, 7a, 7b, 7c, 7d, 7e) est assemblé à la structure porteuse de carrosserie (3, 3a, 3b, 3c, 3d) dans une région située entre au moins deux éléments de carrosserie (4, 5 ; 4a, 14, 16 ; 4b, 4c) mutuellement adjacents, le gabarit de montage (7, 7a, 7b, 7c, 7d, 7e) présentant au moins un bord d'ajustement (10, 10a, 10b, 10c, 10d, 10e) le long duquel on peut aligner au moins un élément de carrosserie adjacent (4, 5 ; 4a, 14, 16 ; 4b, 4c).

2. Véhicule automobile selon la revendication 1,
caractérisé
en ce que le gabarit de montage (7d, 7e) présente des logements de positionnement (37, 38 ; 37a, 38a) au moyen desquels le gabarit de montage (7d, 7e) peut être emboîté sur des éléments de centrage correspondants (32, 33) solidaires de charnières (30, 31) positionnées sur la structure porteuse qui appartiennent à un élément mobile pivotant (4d) de la carrosserie du véhicule automobile, et peut être centré par rapport aux charnières (30, 31).

3. Véhicule automobile selon la revendication 2,
caractérisé
en ce qu'il est prévu, comme élément de centrage (32, 33) sur chaque charnière (30, 31), au moins un doigt de centrage (32, 33) qui fait saillie vers l'extérieur à angle droit et en ce que des logements d'emboîtement (37, 38 ; 37a, 38a) ouverts de façon correspondante sont prévus dans le gabarit de montage (7d, 7e).

4. Véhicule automobile selon une des revendications 1 à 3,
caractérisé
en ce que, sur une charnière (30), est prévue un bord d'appui pour donner appui au gabarit de montage (7d, 7e) dans la direction verticale du véhicule, contre lequel s'appuie une butée d'appui (42, 42a) du gabarit de montage (7d, 7e).

5. Véhicule automobile selon au moins une des revendications précédentes,
caractérisé
en ce que le gabarit de montage (7d, 7e) peut être fixé à la structure porteuse de la carrosserie au moyen de plusieurs points de fixation (40 ; 34 ; 40a) répartis sur sa longueur.

6. Véhicule automobile selon au moins des revendications précédentes,
caractérisé
en ce que le gabarit de montage (7d, 7e) présente au moins une zone d'enclenchement (39, 39a) prévue pour fixer un élément de carrosserie adjacent au moyen d'une liaison à enclenchement.

7. Véhicule automobile selon au moins une des revendications précédentes,
caractérisé
en ce que le gabarit de montage (7d, 7e) est muni de guide-câbles intégrés (43, 43a).

8. Véhicule automobile selon la revendication 1,
caractérisé
en ce que le gabarit de montage (7, 7a, 7b, 7c) peut être fixé au droit de points de fixation de charnières de porte d'une porte latérale (4, 4a, 4b, 4c) du véhicule automobile.

9. Véhicule automobile selon la revendication 2,
caractérisé
en ce que le gabarit de montage (7, 7a) peut être fixé à la structure porteuse de la carrosserie (3,3a) au droit des points de fixation à l'aide des éléments de fixation (8, 9 ; 8a, 9a) prévus pour la fixation des charnières de porte.

10. Véhicule automobile selon une des revendications précédentes,
caractérisé en ce que le gabarit de montage (7, 7a, 70, 7c) est muni d'éléments d'immobilisation (11 ; 17, 18 ; 26, 27 ; 29) pour la fixation d'au moins un élément de carrosserie (5; 14,15) adjacent.

11. Véhicule automobile selon la revendication 8,
caractérisé
en ce que les éléments d'immobilisation (11 ; 17, 18) présentent des guides pour l'emmanchement de l'au moins un élément de carrosserie adjacent (5 ; 14, 16).

12. Véhicule automobile selon la revendication 11,
caractérisé
en ce qu'aux éléments d'immobilisation (11 ; 17, 18) sont associées des zones d'enclenchement pour le blocage par sûreté de forme de l'au moins un élément de carrosserie (5 ; 14, 16) dans la position finale emmanchée.

13. Véhicule automobile selon une des revendications précédentes,
caractérisé
en ce que le gabarit de montage (7, 7a, 7b, 7c) est réalisé en matière plastique sous la forme d'un composant en une seule pièce.

14. Gabarit de montage,
caractérisé
en ce qu'il présente la configuration du gabarit de montage (7, 7a) prévu pour le véhicule automobile selon au moins une des revendications précédentes.

15. Gabarit de montage selon la revendication 14,
caractérisé
en ce qu'au bord d'ajustement (10b, 10c, 10d, 10e) est associée une région de logement s'étendant parallèlement, contre laquelle l'élément de carrosserie correspondant peut être appliqué latéralement de l'extérieur.
